# EUROPÄISCHE PATENTSCHRIFT

(11) **EP 2 414 471 B1**
(45) Veröffentlichungstag und Bekanntmachung des Hinweises auf die Patenterteilung: **20.03.2013**
(21) Anmeldenummer: 10715757.0
(22) Anmeldetag: 31.03.2010
(51) Int. Cl.: C09J 103/02, C09J 9/00, C09J 11/06, C09J 103/04, C09J 103/08

(54) **PLASTISCHE KLEBSTOFFZUSAMMENSETZUNG**
PLASTIC ADHESIVE COMPOSITION
COMPOSITION DE COLLE PLASTIQUE

(30) Priorität: 31.03.2009 DE 102009002021
(43) Veröffentlichungstag der Anmeldung: 08.02.2012
(73) Patentinhaber: Henkel AG & Co. KGaA, 40589 Düsseldorf (DE)
(72) Erfinder: PICKER, Stefan, 41541 Dormagen (DE); SCHRIEFERS, Mathias, 41239 Mönchengladbach (DE)
(86) Internationale Anmeldenummer: PCT/EP2010/054319
(87) Internationale Veröffentlichungsnummer: WO 2010/112551

(56) Entgegenhaltungen:
- DE-A1- 1 817 985
- US-A1- 2007 149 669

## Beschreibung

Die vorliegende Erfindung betrifft eine Klebstoffzusammensetzung, enthaltend wenigstens ein Salz einer Carbonsäure mit 8 bis 36 C-Atomen, ein synthetisches Polymer und Wasser. Weiterhin sind ein Klebestift, der die Klebstoffzusammensetzung enthält, und die Verwendung der Klebstoffmasse zur Herstellung eines Klebestifts Gegenstand der Erfindung.

Im Stand der Technik sind Klebstoffzusammensetzungen der eingangs genannten Art bekannt. So ist in der DE 1 811 466 eine Klebstoffzusammensetzung beschrieben, die Salze aliphatischer Carbonsäuren, einen Klebstoff und Wasser enthalten. Dabei ist insbesondere vorgesehen, die Klebstoffzusammensetzung in die Form eines Klebestifts zu bringen, der unter einem gewissen Andruck über eine zu verklebende Fläche geführt werden kann, wobei aus dem Abrieb des Klebestifts ein Film der Klebstoffzusammensetzung auf der Fläche ausgebildet wird. Es ist weiterhin allgemein offenbart, der Klebstoffzusammensetzung Glycerin oder Glykol als Weichmacher zuzusetzen, um den Abrieb des Klebestift zu verbessern.

Allerdings weisen Klebestifte aus der bekannten Klebstoffzusammensetzung trotz allem nicht die gewünschten plastischen Eigenschaften auf. Es hat es sich insbesondere als schwierig erwiesen, einen Klebestift herzustellen, der sowohl einen hohen Abrieb auf verschiedenartigen Substraten als auch eine ausreichende Festigkeit und Formstabilität aufweist. So sind diese Klebestifte entweder zu hart, um eine für eine sichere Verklebung ausreichende Klebstoffmenge auftragen zu können, oder sind so weich, dass sie während des Auftragens durch die dabei wirkenden Scherkräfte deformiert werden.

Es ist daher die Aufgabe der vorliegenden Erfindung, eine Klebstoffzusammensetzung der eingangs genannten Art anzugeben, die gegenüber den aus dem Stand der Technik bekannten Stoffen deutlich verbesserte plastische Eigenschaften, d.h. insbesondere eine hohe Abreibbarkeit bei gleichzeitiger ausreichender Festigkeit aufweist.

Diese Aufgabe wird erfindungsgemäß dadurch gelöst, dass in der Klebstoffzusammensetzung wenigstens eine Verbindung der allgemeinen Formel (I) 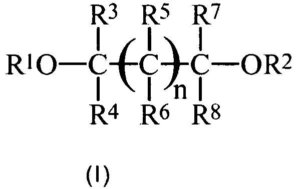 enthalten ist, bei der R¹-R⁸ unabhängig voneinander H, Methyl, Ethyl, Propyl, Isopropyl, Butyl, Isobutyl oder tert.-Butyl und n = 1 bis 8 sind.

Gegenstand der Erfindung ist daher eine Klebstoffzusammensetzung, die wenigstens ein Salz einer Carbonsäure mit 8 bis 36 C-Atomen, ein synthetisches Polymer und Wasser enthält und die dadurch gekennzeichnet ist, dass wenigstens eine Verbindung der allgemeinen Formel (I) 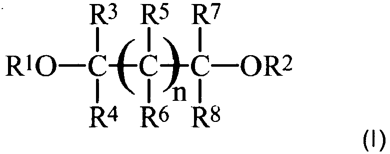 enthalten ist, bei der R¹-R⁸ unabhängig voneinander H, Methyl, Ethyl, Propyl, Isopropyl, Butyl, Isobutyl oder tert.-Butyl und n = 1 bis 8 sind.

Der Gegenstand der Erfindung ist also im Wesentlichen eine Klebstoffzusammensetzung, enthaltend wenigstens ein Salz einer Carbonsäure mit 8 bis 36 C-Atomen, einen Klebstoff und Wasser, dadurch gekennzeichnet, dass wenigstens eine Verbindung der allgemeinen Formel (I) 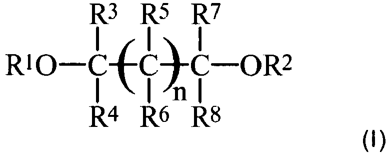 enthalten ist, bei der R¹-R⁸ unabhängig voneinander H, Methyl, Ethyl, Propyl, Isopropyl, Butyl, Isobutyl oder tert.-Butyl und n = 1 bis 8 sind.

Überraschenderweise ist gefunden worden, dass der Zusatz wenigstens einer Verbindung der allgemeinen Formel I dazu führt, dass die erhaltene Klebstoffzusammensetzung eine hohe Festigkeit bei gleichzeitig guter Abreibbarkeit aufweist.

Unter einer "Klebstoffzusammensetzung" wird eine Zusammensetzung verstanden, die - gegebenenfalls nach einem physikalischen Vorgang oder einer chemischen Reaktion - Fügeteile durch Flächenhaftung (Adhäsion) und innere Festigkeit (Kohäsion) miteinander verbindet beziehungsweise dazu in der Lage ist.

R¹ und/oder R² können in der Formel I insbesondere H sein. In diesem Fall wird eine Klebstoffzusammensetzung erhalten, die eine erhöhte Festigkeit aufweist.

Gemäß einer bevorzugten Ausführungsform der Erfindung kann bei der Formel I n = 1 oder 2 sein.

Eine Klebstoffzusammensetzung mit besonders hoher Abreibbarkeit bei gleichzeitig ausreichender Festigkeit wird erhalten, wenn R⁵ und/oder R⁶ Methyl, Ethyl, Propyl, Isopropyl, Butyl, Isobutyl oder tert.-Butyl und R³, R⁴, R⁷ und R⁸ H sind.

Die Klebstoffzusammensetzung kann insbesondere als Verbindung der allgemeinen Formel (I) 2-Methyl-1,3-Propandiol und/oder 2,2-Dimethyl-1,3-Propandiol und/oder Isoprenglykol und/oder 3-Methoxy-Methyl-1-Butanol enthalten.

Vorteilhafterweise enthält die Klebstoffzusammensetzung 2 bis 20, bevorzugt 4 bis 15, besonders bevorzugt 5 bis 12 und insbesondere 6 bis 10 Gew.-% wenigstens einer Verbindung mit der allgemeinen Formel (I). In diesem Fall weist die Klebstoffzusammensetzung besonders bevorzugte plastische Eigenschaften auf.

Gemäß einer weiteren Ausführungsform hat die Klebstoffzusammensetzung einen Gesamtwassergehalt kleiner 45 größer 5, bevorzugt kleiner 40 größer 8, besonders bevorzugt kleiner 35 größer 10 und insbesondere kleiner 30 größer 12 Gew.-%. Eine derartige Klebstoffzusammensetzung besitzt nicht nur sehr gute plastische Eigenschaften, sie ist darüber hinaus auch transparent oder transluszent.

Gemäß einer besonders bevorzugten Ausführungsform der erfindungsgemäßen Klebstoffzusammensetzung ist diese weitestgehend transparent oder transluszent. Unter einer transluszenten Klebstoffzusammensetzung wird im Sinne der vorliegenden Erfindung eine Klebstoffzusammensetzung verstanden, bei der bei senkrechter Bestrahlung eines Würfels der formstabilen Klebemasse mit einer Kantenlänge von 2 cm mit einem Laserstrahl von einem Durchmesser von 2 mm, einer Leistung vom einem mW unter einer Wellenlänge vom 632 nm auf der gegenüberliegenden Seite der bestrahlten Würfelfläche der Lichtpunkt mit dem menschlichen Auge noch als solcher erkennbar ist. Hierbei kann aufgrund von Beugungs- bzw. Streuungseffekten eine leichte Vergrößerung des Lichtpunktes auftreten. Transparente Klebstoffzusammensetzungen zeigen bei diesem Test praktisch keine Vergrößerung des Lichtpunktes.

Unter einem synthetischen Polymer wird ein Polymer verstanden, das künstlich hergestellt und/oder zumindest modifiziert wurde. Das wenigstens eine synthetische Polymer kann aus der Gruppe Polyacrylate, Stärke-Derivate, Polyvinylpyrrolidon, Polyvinylalkohol, Proteine, Polyurethane und Polyvinylacetat ausgewählt sein. Dementsprechend kann der Klebstoff aus der Gruppe Acryl-Kleber, Stärke-Kleber, Polyvinylpyrolidon-Kleber, Polyvinylalkohol-Kleber, Protein-Kleber, Polyurethan-Kleber und Polyvinylacetat-Kleber ausgewählt sein. In diesem Fall wird eine besonders starke Klebewirkung erzielt.

Der Begriff "Polyacrylate" umfasst vorliegend sowohl Salze als auch Ester der Polyacrylsäure.

Die vorgenannten Polymere sind besonders bevorzugt, da auf diese Weise Klebemassen für Klebestifte hergestellt werden, mit denen Papier einfach und zuverlässig verklebt werden kann. Insbesondere geeignet sind hierbei zum einen Polyurethane alleine oder in Kombination mit Polyvinylpyrrolidon und zum anderen Stärkeether. Der Einsatz dieser Polymere bzw. Polymermischungen ermöglicht die Herstellung von transparenten Klebemassen mit sehr guten Verklebungseigenschaften. Die oben genannten Polymere oder Klebstoffe werden üblicherweise in Form wässriger Dispersionen eingesetzt.

Unter einem "Polyurethan" wird ein Polymer verstanden, in dessen Makromolekülen mindestens zwei Urethan-Gruppierungen -NH-CO-O- vorhanden sind, welche Wiederholungseinheiten und/oder Strukturabschnitte dieses Polymers miteinander verknüpfen. Unter "Stärke-Derivaten" werd en Stärken verstanden, die gegenüber ihrer eigentlichen Erscheinungsform (Polykondensationsprodukt von o-Glukose) synthetisch modifiziert wurden. Unter einem Stärkeether wird ein Stärke-Derivat verstanden, in dem die Hydroxy-Gruppen der Glukose.

Einheiten zumindest teilweise verethert sind. "Teilweise" bedeutet dabei, dass zumindest eine OH-Gruppe des Stärkemoleküls verethert ist. Die Hydroxy-Gruppen können mit Alkyl- oder Aralkyl-Resten verethert sein, die ihrerseits weitergehende Substitution, zum Beispiel mit Carboxy-Gruppen, aufweisen können. Stärkeether sind im Rahmen der vorliegenden Erfindung als synthetisches Polymer besonders bevorzugt.

Die Klebstoffzusammensetzung kann wenigstens einen Zucker enthalten. Dabei können 15 bis 40, bevorzugt 18 bis 35, besonders bevorzugt 20 bis 32 und insbesondere 22 bis 28 Gew.-% Zucker enthalten sein.

Die vorliegende Erfindung umfasst weiterhin einen Klebestift, der eine erfindungsgemäße Klebstoffzusammensetzung enthält. Ein derartiger Klebestift ist geeignet auf verschiedenen Substraten eine ausreichende Klebstoffmenge für eine sichere Verklebung aufzutragen, ohne dass er beim Auftragen aufgrund der dabei wirkenden Scherkräfte deformiert wird.

Weiterhin ist auch die Verwendung einer erfindungsgemäßen Klebstoffzusammensetzung zur Herstellung eines leicht abreibbaren formstabilen Klebestifts Gegenstand der Erfindung.

Die Erfindung wird im Folgenden anhand von Ausführungsbeispielen näher erläutert.

Tabelle 1 zeigt die Zusammensetzung von vier Vergleichs-Klebstoffzusammensetzungen (Beispiele 1 bis 4).

**Tabelle 1**

| | **Beispiel 1** | **Beispiel 2** | **Beispiel 3** | **Beispiel 4** |
|---|---|---|---|---|
| | | | | |

| **Substanz:** | % | % | % | % |
|---|---|---|---|---|
| Stärkeklebstoff | 47,00 | 47,00 | 53,00 | 53,00 |
| 1,2-Propylenglykol | 8,00 | - | 8,00 | - |
| Glycerin | - | 8,00 | - | - |
| Pulvergelantine | 3,00 | 3,00 | - | - |
| Wasser | 9,00 | 9,00 | 9,04 | 13,34 |
| Edenor C 14 | 1,68 | 1,68 | 1,90 | 1,90 |
| Edenor C 16 | 3,30 | 3,30 | 3,72 | 3,72 |
| Natriumsulfit | 0,20 | 0,20 | 0,20 | 0,20 |
| Parfümöl | 0,02 | 0,02 | 0,02 | 0,02 |
| Caprolactam | 0,98 | 0,98 | 0,98 | 0,98 |
| Zucker | 23,68 | 23,68 | 20,00 | 23,00 |
| Organischer Verdicker | 1,70 | 1,70 | 1,70 | 2,40 |
| 10 %ige Natronlauge | 1,38 | 1,38 | 1,38 | 1,38 |
| Tinopal CBS-X | 0,02 | 0,02 | 0,02 | 0,02 |
| Wasserstoffperoxid(30 %) | 0,04 | 0,04 | 0,04 | 0,04 |

Die Klebstoffzusammensetzungen der Beispiele 1 und 3 enthalten 1,2-Propylenglykol und die des Beispiels 2 Glycerin als Weichmacher. Die Zusammensetzung des Beispiels 4 weist dagegen keinen Weichmacher auf.

In der Tabelle 2 sind die Zusammensetzungen von drei erfindungsgemäßen Klebstoffzusammensetzungen beschrieben (Beispiele 5 bis 7).

**Tabelle 2**

| | **Beispiel 5** | **Beispiel 6** | **Beispiel 7** |
|---|---|---|---|
| | | | |

| **Substanz:** | % | % | % |
|---|---|---|---|
| Stärkeklebstoff | 47,00 | 47,00 | 53,00 |
| 2,2-Dimethyl-1,3-propandiol | 8,00 | - | - |
| Isoprenglykol | - | - | 8,00 |
| 3-Methoxy-3-Methyl-1- | - | 8,00 | - |
| Pulvergelantine | 3,00 | 3,00 | - |
| Wasser | 9,00 | 9,00 | 9,04 |
| Edenor C 14 | 1,68 | 1,68 | 1,90 |
| Edenor C 16 | 3,30 | 3,30 | 3,72 |
| Natriumsulfit | 0,20 | 0,20 | 0,20 |
| Parfümöl | 0,02 | 0,02 | 0,02 |
| Caprolactam | 0,98 | 0,98 | 0,98 |
| Zucker, Grundsorte | 23,68 | 23,68 | 20,00 |
| Organischer Verdicker | 1,70 | 1,70 | 1,70 |
| 10 %ige Natronlauge | 1,38 | 1,38 | 1,38 |
| Tinopal CBS-X | 0,02 | 0,02 | 0,02 |
| Wasserstoffperoxid (30 %) | 0,04 | 0,04 | 0,04 |

Bei den Prozentangaben in den Tabellen 1 und 2 handelt es sich jeweils um Gewichtsprozente. Die aufgeführten Handelsnamen stehen für die folgenden chemischen Substanzen: Edenor 14 ist eine C14-Fettsäure, Edenor 16 ist eine C16-Fettsäure, Tinopal ist eine modifizierte Stärke.

Die Klebstoffzusammensetzungen der Beispiele 1 bis 7 wurden nach der folgenden allgemeinen Vorschrift hergestellt: Zunächst wurde der Stärkeklebstoff als wässrige Lösung (zum Beispiel 41%ige wässrige Lösung) vorgelegt. Anschließend wurde der organische Verdicker zugegeben und dann nach kurzem Rühren weiteres Wasser zugesetzt. Die resultierende Lösung wurde erhitzt und bei 43-54 °C wurde Wasserstoffperoxid, bei 71-78 °C Caprolactam und Natriumsulfit und bei 80-84°C die Fettsäuren hinzugefügt. Danach wurden gegebenenfalls Propylenglykol, Glycerin, 2,2-Dimethyl-1,3-propandiol, Isoprenglykol, 3-Methoxy-3-Methyl-1-Butanol und Pulvergelantine zugesetzt. Es wurde auf 90-97 °C aufgeheizt und die Temperatur für 15 Minuten gehalten. Nach Abkühlung auf 80-85 °C wurde die Saccharose zugegeben und der Ansatz mittels Unterdruck entgast. Der pH-Wert 10 wurde bestimmt und gegebenenfalls durch Zugabe von 10%iger Natronlauge eingestellt.

Anschließend wurden die Klebstoffzusammensetzungen der Beispiele 1 bis 7 jeweils in die For m zylindrischer Prüfkörper mit einer Länge von 3 cm und einem Durchmesser von 2,3 cm gebracht und für 24 Stunden bei 20 °C gelagert. Sie wurden dann mit Hilfe der nachfolgend beschriebenen Testmethoden auf ihre Festigkeit und auf ihre Abriebeigenschaften überprüft.

Bei der Durchführung der Untersuchungen wurden die folgenden physikalischen Bedingungen eingehalten: Die Temperatur lag im Bereich zwischen 20 und 23 °C und die Luftfeuchtigkeit zwischen 38 bis 55 %.

Um die Festigkeit der Prüfkörper zu ermitteln wurden diese horizontal auf einer ebenen, vertikal verlaufenden Testfläche angeordnet und dann deren Deckfläche vollflächig mit einer definierten Kraft beaufschlagt. Dabei wurde die Kraft ermittelt, die benötigt wurde, um den Prüfkörper zu zerdrücken. Dieser Messwert wird als Druckfestigkeit bezeichnet. Die angegebenen Werte der Druckfestigkeit sind jeweils Mittelwerte, die auf mindestens drei Messergebnissen beruhen.

Der Abriebeigenschaften des jeweiligen Prüfkörpers wurde bestimmt, indem der Prüfkörper zunächst in eine passende Schutzhülse eingeschoben und dort so fixiert wurde, dass 0,9 cm von ihm aus der Hülse hervorragten. Anschließend wurde die Hülse an einem horizontal und vertikal linear verfahrbaren Stativ derart befestigt, dass die aus der Hülse herausragende Deckfläche des zylinderförmigen Prüfkörpers flächig auf einem unter dem Stativ fixierten Blatt aus Papier auflag. Bei dem Blatt Papier handelte es sich um ein Produkt des Unternehmens "Maestro" der Größe A4 mit einem Gewicht von 80 g/m² und der Papierfarbe rot (ZR09). Das Gewicht des jeweiligen Blatts wurde vor der Durchführung des Abriebtests bestimmt.

Die Hülse wurde mit einem Gewicht von 2,28 kg in Richtung des Blatts beaufschlagt, um einen ausreichenden Anpressdruck zu gewährleisten. Dann wurde die Hülse mit dem Prüfkörper in Längsrichtung des Blatts von der linken zur rechten Kante und wieder zurück in gerader Linie bewegt, wobei die Klebstoffzusammensetzung des Prüfkörpers in Form einer Bahn auf das Blatt aufgetragen wurde. Anschließend wurde das Stativ mit der Hülse in Querrichtung des Blattes verschoben, so dass der Prüfkörper mit seiner Deckfläche auf einem noch nicht abgefahrenen Bereich des Blatts auflag. Danach wurde wiederum in der beschrieben Weise eine weitere Bahn, die parallel zur ersten Bahn angeordnet war, abgefahren. Auf diese Weise den insgesamt 10 einzelne Bahnen der jeweils zu untersuchenden Klebstoffzusammensetzungen auf das Papier aufgebracht. Zuletzt wurde das beschichtete Blatt gewogen und aus der Differenz dieses Wertes zu dem Gewicht des unbeschichteten Blatts die

Auftragsmenge der jeweiligen Klebstoffzusammensetzung ermittelt.

Für jede Klebstoffzusammensetzung der Beispiele 1 bis 7 wurden jeweils 6 Prüfkörper in der beschriebenen Weise bezüglich ihrer Abreibeigenschaften untersucht, wobei dann aus den erhaltenen Auftragsmengen der Mittelwert gebildet wurde.

In der Tabelle 3 sind die jeweils für die Beispiele 1 bis 7 ermittelten Druckfestigkeiten, Auftragsmengen sowie der optische Eindruck der Prüfkörper angegeben.

**Tabelle 3**

| | **Druckfestigkeit [N]** | **Auftragmenge [g]** | **Optischer Eindruck** |
|---|---|---|---|
| **Beispiel 1** | 120 | 0,98 | milchig trüb |
| **Beispiel 2** | 143 | 0,85 | milchig trüb |
| **Beispiel 3** | 126 | 1,07 | milchig trüb |
| **Beispiel 4** | 120 | 0,9 | milchig trüb |
| **Beispiel 5** | 89 | 4,1 | transparent |
| **Beispiel 6** | 66 | 3,6 | transparent |
| **Beispiel 7** | 68 | 4,6 | transparent |

Aus der Tabelle 3 sind unmittelbar zwei wesentliche Unterschiede zwischen den Vergleichsbeispielen 1 bis 4 und den erfindungsgemäßen Klebstoffzusammensetzungen der Beispiele 5 bis 7 abzulesen. So weisen die Prüferkörper aus den erfindungsgemäßen Klebstoffzusammensetzungen eine reduzierte Druckfestigkeit bei gleichzeitig höherer Abreibbarkeit auf. Dies wird beispielsweise durch den direkten Vergleich der Prüfkörper 1 und 5 belegt, der eine Differenz der Druckfestigkeit von 31 N und der Auftragmenge von 3,12 g zeigt. Anhand dieses Vergleiches zeigt sich auch, dass die Reduktion der Druckfestigkeit um 26 % gleichzeitig eine Verbesserung der Auftragsmenge von 418% mit sich bringt.Durch den Zusatz wenigstens einer Verbindung mit der allgemeinen Formel I wird also eine Klebstoffzusammensetzung erhalten werden, die eine hohe Abreibbarkeit aufweist. Gleichzeitig besitzen die aus den erfindungsgemäßen Klebstoffzusammensetzungen hergestellten Prüfkörper aber auch eine ausreichende Stabilität. So sind die oberhalb von 45-50 N liegenden Druckfestigkeiten der erfindungsgemäßen Prüfkörper (Beispiele 5 bis 7) hoch genug um eine Deformation durch die beim Auftragen wirkenden Scherkräfte zu verhindern. Wird die Druckfestigkeit dahingegen unter die Grenze von 45-50 N vermindert, werden die Prüfkörper instabil und es kommt zu einer unerwünschten Deformation.

Die größeren Auftragsmengen der erfindungsgemäßen Klebstoffzusammensetzungen der Beispiele 5 bis 7 bringen auch den Vorteil einer verlängerten Abbindzeit mit sich. Dies ermöglicht es, zu verklebende Substrate nach dem Auftragen der Klebstoffzusammensetzung über einen längeren Zeitraum zu repositionieren.

Der Tabelle 3 ist weiterhin zu entnehmen, dass die Prüfkörper aus den erfindungsgemäßen Klebstoffzusammensetzungen 5 bis 7 transparent sind. Im Gegensatz hierzu sind die Prüferkörper, die aus den Klebstoffzusammensetzungen der Vergleichsbeispiele 1 bis 4 hergestellt wurden, milchig trüb. Es ist somit festzustellen, dass die Prüfkörper der Beispiele 5 bis 7 gegenüber den Prüfkörpern der Vergleichsbeispiele 1 bis 4 eine höhere Durchlässigkeit für Licht, insbesondere im sichtbaren Bereich aufweisen.

## Patentansprüche

1. Klebstoffzusammensetzung, enthaltend wenigstens ein Salz einer Carbonsäure mit 8 bis 36 C-Atomen, ein synthetisches Polymer und Wasser, **dadurch gekennzeichnet, dass** wenigstens eine Verbindung der allgemeinen Formel (I) 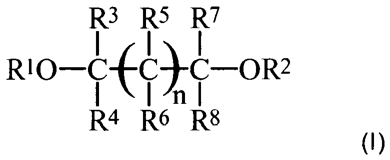 enthalten ist, bei der R¹-R³ unabhängig voneinander H, Methyl, Ethyl, Propyl, Isopropyl, Butyl, Isobutyl oder tert.-Butyl und n = 1 bis 8 sind.

2. Klebstoffzusammensetzung nach Anspruch 1, **dadurch gekennzeichnet, dass** R¹ und/oder R² H sind.

3. Klebstoffzusammensetzung nach einem der vorhergehenden Ansprüche, **dadurch gekennzeichnet, dass** n = 1 oder 2 ist.

4. Klebstoffzusammensetzung nach einem der vorhergehenden Ansprüche, **dadurch gekennzeichnet, dass** R⁵ und/oder R⁶ Methyl, Ethyl, Propyl, Isopropyl, Butyl, Isobutyl oder tert.-Butyl und R³, R⁴, R⁷ und R⁸ H sind.

5. Klebstoffzusammensetzung nach Anspruch 1, **dadurch gekennzeichnet, dass** sie als Verbindung der allgemeinen Formel (I) 2-Methyl-1,3-Propandiol und/oder 2,2-Dimethyl-1,3-Propandiol und/oder Isoprenglykol und/oder 3-Methoxy-Methyl-1-Butanol enthält.

6. Klebstoffzusammensetzung nach einem der vorhergehenden Ansprüche, **dadurch gekennzeichnet, dass** 2 bis 20, bevorzugt 4 bis 15, besonders bevorzugt 5 bis 12 und insbesondere 6 bis 10 Gew.-% wenigstens einer Verbindung mit der allgemeinen Formel (I) enthalten sind.

7. Klebstoffzusammensetzung nach einem der vorhergehenden Ansprüche, **dadurch gekennzeichnet, dass** sie einen Gesamtwassergehalt kleiner 45 größer 5, bevorzugt kleiner 40 größer 8, besonders bevorzugt kleiner 35 größer 10 und insbesondere kleiner 30 größer 12 Gew.-% aufweist.

8. Klebstoffzusammensetzung nach einem der vorstehenden Ansprüche, **dadurch gekennzeichnet, dass** die Klebstoffzusammensetzung weitestgehend transparent oder transluszent ist.

9. Klebstoffzusammensetzung nach einem der vorhergehenden Ansprüche, **dadurch gekennzeichnet, dass** das wenigstens eine synthetische Polymer ausgewählt ist aus der Gruppe Polyacrylate, Stärke-Derivate, Polyvinylpyrrolidon, Polyvinylalkohol, Proteine, Polyurethane und Polyvinylacetat.

10. Klebstoffzusammensetzung nach einem der vorhergehenden Ansprüche, **dadurch gekennzeichnet, dass** wenigstens ein Zucker enthalten ist.

11. Klebstoffzusammensetzung nach Anspruch 10, **dadurch gekennzeichnet, dass** 15 bis 40, bevorzugt 18 bis 35, besonders bevorzugt 20 bis 32 und insbesondere 22 bis 28 Gew.-% Zucker enthalten sind.

12. Klebestift, enthaltend eine Klebstoffzusammensetzung nach einem der vorhergehenden Ansprüche.

13. Verwendung einer Klebstoffzusammensetzung nach einem der Ansprüche 1 bis 11 zur Herstellung eines leicht abreibbaren formstabilen Klebestifts.

## Claims

1. An adhesive composition containing at least one salt of a carboxylic acid having 8 to 36 carbon atoms, a synthetic polymer, and water, **characterized in that** at least one compound of the general formula (I), 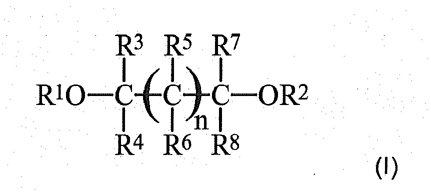 in which R¹ to R⁸, mutually independently, are hydrogen, methyl, ethyl, propyl, isopropyl, butyl, isobutyl, or tert-butyl, and n = 1 to 8, is contained.

2. The adhesive composition according to Claim 1, **characterized in that** R¹ and/or R² are hydrogen.

3. The adhesive composition according to one of the preceding claims, **characterized in that** n = 1 or 2.

4. The adhesive composition according to one of the preceding claims, **characterized in that** R⁵ and/or R⁶ are methyl, ethyl, propyl, isopropyl, butyl, isobutyl, or tert-butyl, and R³, R⁴, R⁷, and R⁸ are hydrogen.

5. The adhesive composition according to Claim 1, **characterized in that** it contains, as a compound of the general formula (I), 2-methyl-1,3-propanediol and/or 2,2-dimethyl-1,3-propanediol and/or isoprene glycol and/or 3-methoxymethyl-1-butanol.

6. The adhesive composition according to one of the preceding claims, **characterized in that** 2 to 20, preferably 4 to 15, particularly preferably 5 to 12, and in particular 6 to 10 wt% of at least one compound having the general formula (I) is contained.

7. The adhesive composition according to one of the preceding claims, **characterized in that** it has a total water content of less than 45 and greater than 5, preferably less than 40 and greater than 8, particularly preferably less than 35 and greater than 10, and in particular less than 30 and greater than 12 wt%.

8. The adhesive composition according to one of the preceding claims, **characterized in that** the adhesive composition is very largely transparent or translucent.

9. The adhesive composition according to one of the preceding claims, **characterized in that** the at least one synthetic polymer is selected from the group of polyacrylates, starch derivatives, polyvinylpyrrolidone, polyvinyl alcohol, proteins, polyurethanes, and polyvinyl acetate.

10. The adhesive composition according to one of the preceding claims, **characterized in that** at least one sugar is contained.

11. The adhesive composition according to Claim 10, **characterized in that** 15 to 40, preferably 18 to 35, particularly preferably 20 to 32, and in particular 22 to 28 wt% sugar is contained.

12. A glue stick containing an adhesive composition according to one of the preceding claims.

13. Use of an adhesive composition according to one of Claims 1 to 11 for the manufacture of an easily rubbable dimensionally stable glue stick.

## Revendications

1. Composition adhésive contenant au moins un sel d'un acide carboxylique comprenant de 8 à 36 atomes de carbone, un polymère synthétique et de l'eau, **caractérisée en ce qu'**elle contient au moins un composé répondant à la formule générale (I) 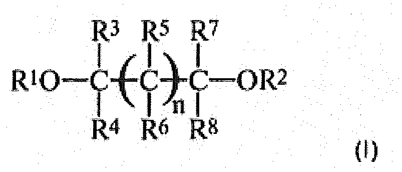 dans laquelle R¹ à R⁸ représentent, indépendamment l'un de l'autre, un atome d'hydrogène, un groupe méthyle, un groupe éthyle, un groupe propyle, un groupe isopropyle, un groupe butyle, un groupe isobutyle ou un groupe tert.-butyle et n = 1 à 8.

2. Composition adhésive selon la revendication 1, **caractérisée en ce que** R¹ et/ou R² représentent un atome d'hydrogène.

3. Composition adhésive selon l'une quelconque des revendications précédentes, **caractérisée en ce que** n = 1 ou 2.

4. Composition adhésive selon l'une quelconque des revendications précédentes, **caractérisée en ce que** R⁵ et/ou R⁶ représentent un groupe méthyle, un groupe éthyle, un groupe propyle, un groupe isopropyle, un groupe butyle, un groupe isobutyle ou un groupe tert.-butyle et R³, R⁴, R⁷ et R⁸ représentent un atome d'hydrogène.

5. Composition adhésive selon la revendication 1, **caractérisée en ce qu'**elle contient, à titre de composé répondant à la formule générale (I), du 2-méthyl-1,3-propanediol et/ou du 2,2-diméthyl-1,3-propanediol et/ou de l'isoprèneglycol et/ou du 3-méthoxy-méthyl-1-butanol.

6. Composition adhésive selon l'une quelconque des revendications précédentes, **caractérisée en ce qu'**elle contient de 2 à 20, de préférence de 4 à 15, de manière particulièrement préférée de 5 à 12 et en particulier de 6 à 10 % en poids d'au moins un composé répondant à la formule générale (I).

7. Composition adhésive selon l'une quelconque des revendications précédentes, **caractérisée en ce qu'**elle présente une teneur totale en eau inférieure à 45 et supérieure à 5, de préférence inférieure à 40 et supérieure à 8, de manière particulièrement préférée inférieure à 35 et supérieure à 10, et en particulier inférieure à 30 et supérieure à 12 % en poids.

8. Composition adhésive selon l'une quelconque des revendications précédentes, **caractérisée en ce que** la composition adhésive est transparente ou translucide dans une très large mesure.

9. Composition adhésive selon l'une quelconque des revendications précédentes, **caractérisée en ce que** ledit au moins un polymère synthétique est choisi parmi le groupe comprenant des polyacrylates, des dérivés de l'amidon, de la polyvinylpyrolidone, de l'alcool polyvinylique, des protéines, des polyuréthanes et de l'acétate de polyvinyle.

10. Composition adhésive selon l'une quelconque des revendications précédentes, **caractérisée en ce qu'**elle contient au moins un sucre.

11. Composition adhésive selon la revendication 10, **caractérisée en ce qu'**elle contient de 15 à 40, de préférence de 18 à 35, de manière particulièrement préférée de 20 à 32 et en particulier de 22 à 28 % en poids de sucre.

12. Bâton de colle contenant une composition adhésive selon l'une quelconque des revendications précédentes.

13. Utilisation d'une composition adhésive selon l'une quelconque des revendications 1 à 11, pour la fabrication d'un bâton de colle résistant à la déformation et qui s'use aisément par frottement.
